# EUROPÄISCHE PATENTSCHRIFT

(11) **EP 4 234 379 B1**
(45) Veröffentlichungstag und Bekanntmachung des Hinweises auf die Patenterteilung: **29.04.2026**
(21) Anmeldenummer: 23168540.5
(22) Anmeldetag: 10.03.2020
(51) Int. Cl.: A01B 33/00, A01B 45/02, A01D 34/08, B62D 51/06

(54) **EINACHSFAHRZEUG**
SINGLE AXLE VEHICLE
VÉHICULE À ESSIEU SIMPLE

(30) Priorität: 18.03.2019 DE 102019106784
(43) Veröffentlichungstag der Anmeldung: 30.08.2023
(62) Teilanmeldung aus: 20161970.7
(73) Patentinhaber: Rapid Technic GmbH, 88693 Deggenhausertal/Mennwangen (DE)
(72) Erfinder: Brielmaier, Martin, 88048 Friedrichshafen (DE)
(74) Vertreter: Patentanwälte und Rechtsanwalt Weiß, Arat & Partner mbB

(56) Entgegenhaltungen:
- EP-A1- 1 731 014
- AT-A1- 513 191
- AT-B1- 513 191
- JP-A- 2009 184 411
- ANONYMOUS: "Original-Betriebsanleitung Brielmaier Motorm�her", 30 November 2013 (2013-11-30), pages 1 - 56, XP009520012, Retrieved from the Internet <URL:https://www.yumpu.com/de/document/view/19446219/original-betriebsanleitung-brielmaier-motormaher>
- BRIELMAIER: "Die leistungsf�hige Universal-Machine", 31 December 2015 (2015-12-31), XP055716736, Retrieved from the Internet <URL:https://www.wilmers-kommunaltechnik.de/PDF/Brielmaier.pdf> [retrieved on 20200721]
- M�HTECHNIK FUTTERERNTE ET AL: "Rapid MONTA schlagkr�ftige M�hmaschine f�r extreme Steilhanglagen", 31 May 2016 (2016-05-31), XP055716729, Retrieved from the Internet <URL:https://www.landmaschinen-zuberbuehler.ch/uploads/91DZUFG2/prospekt-rapid-monta_de.pdf> [retrieved on 20200721]

## Beschreibung

### Technisches Gebiet

Die Erfindung betrifft ein Einachsfahrzeug nach dem Oberbegriff des Anspruchs 1.

### Stand der Technik

Derartige Einachsfahrzeuge sind bereits in vielfältiger Form und Ausgestaltung bekannt und gebräuchlich. So wird beispielsweise in der DE 10 2005 026 754 A1, beziehungsweise in der EP 1 731 014 A1 ein Einachsfahrzeug offenbart, bei dem der Antrieb für zumindest eine Stachelwalze in der Stachelwalze selbst angeordnet ist.

Weiter wird auf die Veröffentlichung XP009520012 mit dem Titel "Original-Betriebsanleitung Brielmaier Motormäher" vom 30.11.2013 verwiesen. Auch wird auf die Veröffentlichung XP055716736 mit dem Titel "Brielmaier: Die leistungsfähige Universal-Maschine" vom 31.12.2015. Ausserdem wird auf die Veröffentlichung XP055716729 mit dem Titel "Mähtechnik Futterernte et al.: Rapid MONTA schlagkräftige Mähmaschine für extreme Steilhanglagen" vom 31.5.2016 verwiesen. Sie zeigen Einachsmäher nach dem Oberbegriff des Anspruchs 1.

Weiterhin wird auf die AT 513 191 A1 verweisen, welche unter anderem einen Steuergriff für einen Einachstraktor nach dem Oberbegriff des Anspruchs 1 zeigt. In der JP 2009 184411 A wird ein Rad für eine landwirtschaftliche Maschine offenbart, welche kreisförmige Öffnungen im Felgenbereich zeigt.

Ausserdem wird auf die DE 10 2005 026 761 A1 hingewiesen, welche ein Fahrzeug mit zumindest einer Stachelwalze mit einem Walzenmantel aufweist, auf dessen Oberfläche sich Vorsprünge mit einer Spitze befinden, wobei die Vorsprünge pyramiden- oder kegelförmig als Stacheln ausgebildet sind.

### Aufgabe der Erfindung

Die Aufgabe der vorliegenden Erfindung ist es, ein Einachsfahrzeug zur Verfügung zu stellen, welches im Vergleich zum Stand der Technik eine deutlich verbesserte Ausführung der Stachelwalzen aufweist.

### Lösung der Aufgabe

Zur Lösung der Aufgabe führen die Merkmale nach dem Anspruch 1.

Das erfindungsgemässe Einachsfahrzeug weist einen Antrieb, einen Kühler, ein Hydrauliksystem mit Anschlüssen für Anbaugeräte, beispielsweise standardisierte hydraulische Kupplungsanschlüsse, eine Werkzeugaufnahme, eine erste Stachelwalze und eine zweite Stachelwalze auf. Bei dem Antrieb handelt es sich im bevorzugten Ausführungsbeispiel um einen Verbrennungsmotor. Denkbar sind auch grundsätzlich andere Antriebsformen.

Zwischen der ersten Stachelwalze und der zweiten Stachelwalze ist ein Querträger angeordnet, wobei sich auf dem Querträger wiederum der Antrieb und der Kühler befinden, wobei der Antrieb mit den beiden Stachelwalzen kraftübertragend verbunden ist. Kraftübertragend bedeutet hierbei die Weitergabe der Energie des Antriebs an die beiden Stachelwalzen beispielsweise über ein entsprechendes Getriebe, Übersetzungen und eine Welle.

Dabei weisen die Stachelwalzen jeweils einen Walzenmantel auf, dessen Oberfläche sich Vorsprünge mit einer Spitze befinden, wobei die Vorsprünge pyramiden- oder kegelförmig als Stacheln ausgebildet sind. Dabei ist die Spitze auf eine Basis des Vorsprunges aufgesetzt und lösbar mit der Basis verbunden, wobei die Vorsprünge zumindest teilweise einstückig und dabei aus dem Walzenmantel ausgezogen sind. Dabei verläuft ein äusserer Mantel oder Seitenflächen des Vorsprunges konkav nach innen gewölbt von der Spitze zu einem Basisbereich.

Dabei weist die Spitze eine Gewindebohrung zur Aufnahme eines Schraubenbolzens auf. Ausserdem ist der Schraubenbolzen mit einer Scheibe od. dgl. durchsetzt, welche wiederum in die Basis eingesetzt ist.

Die Scheibe besitzt dabei einen grösseren Durchmesser als eine obere Öffnung der Basis, welche von der Spitze überdeckt ist. Weiter ist die Spitze mit einem abgestützten Ringkragen in die Öffnung der Basis eingesetzt.

Die Spitze wiederum besteht dabei aus einem relativ verschleissfesten Kunststoff.

Die erste Stachelwalze und/oder die zweite Stachelwalze ist/sind luftdurchlässig ausgebildet. Das bedeutet im Einzelnen, dass die Stachelwalzen derart luftdurchlässig sein müssen, dass sie entweder über die Lauffläche oder aber noch bevorzugter über die von dem Antrieb wegweisenden Stirnflächen Luft in den Innenbereich der Stachelwalzen einfliessen kann, um aus dem Innenbereich auf den Kühler beaufschlagt werden zu können.

Die Stachelwalzen weisen auf einer Aussenseite eine Vielzahl von austauschbaren Stacheln auf. Aussenseite bedeutet dabei die Abrollfläche der jeweiligen Stachelwalze. Die austauschbaren Stacheln können dabei ebenfalls einen metallenen Werkstoff sein oder aber auch aus einem Kunststoff. Die Auswahl des Materials der Stacheln unterliegen den Wünschen und Anforderungen des jeweiligen Nutzers.

Der Kühler ist in einem anderen Ausführungsbeispiel in der ersten Stachelwalze und/oder in der zweiten Stachelwalze angeordnet, wobei die erste Stachelwalze und/oder die zweite Stachelwalze luftdurchlässig ausgebildet ist/sind. In diesem Ausführungsbeispiel müsste dann der Kühlkreislauf bzw. das Kühlmedium aus der jeweiligen Stachelwalze heraus zu dem Antrieb gebracht werden.

Wenn die Luft an der Aussenseite der Stachelwalze in den Innenbereich der Stachelwalze gelangt, wird sie dabei im Innenbereich der Stachelwalze während des Durchtritts durch die Stachelwalze heruntergekühlt, sodass die Leistung des Kühlers weiter verstärkt wird. Dieses Herunterkühlen erfolgt auch dadurch, dass die Stachelwalze, welche grösstenteils aus einem metallenen Werkstoff besteht, Wärme an den Untergrund, auf welchem die Stachelwalze abrollt abgibt und dadurch wiederum die durchtretende Luft abkühlt.

In der jeweiligen ersten Stachelwalze und/oder der zweiten Stachelwalze ist ausserdem jeweils eine Innenschale und jeweils eine Aussenschale vorhanden. Als Innenschale oder Aussenschale im Rahmen der Erfindung kommen beispielsweise halbkugelförmige oder trichterförmige Gebilde in Betracht, wobei die Halbkugel eine unförmige unharmonische Oberflächenerstreckung aufweisen kann. In den beiden Stachelwalzen ist die jeweilige Innenschale zu dem Querträger angeordnet und die jeweilige Aussenschale ist weg von dem Querträger angeordnet. Weiter formt die Innenschale einen zweiten Boden aus und die Aussenschale formt einen ersten Boden aus, wobei die beiden Böden aneinander anliegend angeordnet sind. Bei dem jeweiligen Boden kann es sich um einen teils plan ausgeführten Bereich des halbkugelförmigen oder trichterförmigen Gebildes handeln. Durch das Vorsehen der Innenschale und der Aussenschale in der Stachelwalze wird die Stachelwalze in besonderer Weise stabilisiert. Ausserdem entsteht in der Stachelwalze gerade durch die Innenschale zusätzlicher Stauraum, welcher zur Aufnahme von geeigneten Teilen dienen kann. Dadurch kann der Querträger entlastet werden.

Dabei können Teile von dem mittig gelegenen Querträger zu den aussenseitig gelegenen Stachelwalzen verlagert werden. Dies wiederum führt zu einer Verschiebung des Schwerpunktes zu den Aussenseiten des Querträgers. Vor allem können die Teile auch unterhalb des Querträgers in der Stachelwalze angeordnet werden.

Dazu werden die Teile unterhalb des in die Stachelwalze hinein verlaufenden Teils des Querträgers, beispielsweise unterhalb des Nabenantriebs angeordnet. Der Nabenantrieb wird im Rahmen der Erfindung als Kraftübertragung bezeichnet. Das wiederum weist den Vorteil auf, dass sich der Schwerpunkt weiter an den Untergrund annähert und dadurch eine bessere Arbeitslage beispielsweise in steilem Gelände erreicht wird.

In dem Innenbereich der Stachelwalzen ist jeweils die Kraftübertragung gegeben. Dabei handelt es sich um eine Funktionseinheit, welche die Antriebskraft des Antriebs rotierend auf die jeweilige Stachelwalze überträgt.

Die Stachelwalzen weisen auf einer Aussenseite eine Vielzahl von austauschbaren Stacheln auf. Aussenseite bedeutet dabei die Abrollfläche der jeweiligen Stachelwalzen. Die austauschbaren Stacheln können dabei ebenfalls einen metallenen Werkstoff sein oder aber auch aus einem Kunststoff. Die Auswahl des Materials der Stacheln unterliegen den Wünschen und Anforderungen des jeweiligen Nutzers.

Dabei besteht/en die erste Stachelwalze und/oder die zweite Stachelwalze jeweils aus einer Walzenröhre. Dabei handelt es sich um eine an zwei Enden offene Zylinderkonstruktion. Die Aussenseite stellt dabei den Aussenumfang der Zylinderkonstruktion dar, welcher auch einen grösseren Umfang aufweist, als der Innenbereich der Walzenröhre. Hier kann auch angedacht werden, dass die Mantelfläche der Stachelwalze bzw. der Walzenröhre Belüftungsöffnungen aufweisen kann. Dies kann ergänzend zu weiteren solchen Öffnungen erfolgen oder auch alleinig genutzt werden.

Weiter sind in dem Innenbereich der Walzenröhre die Aussenschale und die Innenschale angeordnet, wobei die Aussenschale und die Innenschale eine Trichterform aufweisen, wobei die erste Trichterform der Aussenschale einen ersten Boden ausbildet und die zweite Trichterform einen zweiten Boden ausbildet.

Die Trichterformen weisen dabei jeweils den einen Boden auf, der im Wesentlichen plan ist. Von diesen Böden laufen die Trichterwände expandierend, also umfangsvergrössernd und abgespreizt weg.

In diesem Zusammenhang weist die Aussenschale eine Ansaugöffnung auf. Diese Ansaugöffnung ist in einem bevorzugten Ausführungsbeispiel kreisrund und/oder oval ausgeführt. Bevorzugt sind eine Vielzahl von Ansaugöffnungen in der Aussenschale angeordnet. Sie sind dabei in die jeweilige Trichterwand eingelassen und dienen dem Einlassen von Frischluft in die Walzenröhre, wobei die Frischluft von der dem Antrieb bzw. dem Kühler abgewandten Seite in die Walzenröhre einfliesst. In einem besonders bevorzugten Ausführungsbeispiel weisen die Ansaugöffnungen nahe einer Aussenbördelung der Ansaugöffnung einen grösseren Umfang auf, als die Ansaugöffnungen, welche nahe dem ersten Boden ausgebildet sind. Dadurch wird ein besonders vorteilhaftes Strömungsverhalten erreicht.

Ausserdem weist die Innenschale eine Durchlassöffnung auf. Vielmehr handelt es sich um eine Vielzahl von Durchlassöffnungen. In gleicher Weise umfasst die Innenschale eine Innenbördelung. Diese Durchlassöffnung ist in einem bevorzugten Ausführungsbeispiel kreisrund und/oder oval ausgeführt. Sie ist dabei in die jeweilige Trichterwand eingelassen und dient dem Auslassen von Frischluft aus der Walzenröhre, wobei die Frischluft an der dem Antrieb bzw. dem Kühler zugewandten Seite aus der Walzenröhre ausfliesst. In einem besonders bevorzugten Ausführungsbeispiel weisen die Durchlassöffnungen nahe der Innenbördelung einen grösseren Umfang auf, als die Durchlassöffnungen, welche nahe dem zweiten Boden ausgebildet sind. Dadurch wird ein besonders vorteilhaftes Strömungsverhalten erreicht.

Der erste Boden und der zweite Boden bilden im Einbauzustand einen gemeinsamen Durchbruch aus, wobei der gemeinsame Durchbruch im Einbauzustand eine Walzenanbindung aufnimmt. Einbauzustand bedeutet hierbei, dass die Stachelwalze zur Nutzung komplett zusammengesetzt wurde und in einem Einachsfahrzeug zum Einsatz kommen könnte. Der gemeinsame Durchbruch wird dadurch gebildet, dass der erste Boden eine Öffnung aufweist und der zweite Boden eine weitere Öffnung aufweist. Im Einbauzustand sind die beiden Öffnungen im Wesentlichen kongruent. Durch den Durchbruch ragt eine Antriebswelle der Walzenanbindung, wobei die Antriebswelle gegenseitig durch eine Staubkonstruktion der Art gesichert ist, dass sie zum einen die Antriebswelle mit der Innenschale und der Aussenschale verbindet und dabei alle Bauteile kraftübertragend und fixiert sind. Die jeweilige Walzenanbindung ist mit der Kraftübertragung wirkverbunden. Das bedeutet wiederum, dass beim Rotieren der Antriebswelle eine Rotation der Stachelwalze in gleicher Weise stattfindet.

Die Aussenschale umfasst die Aussenbördelung. Es handelt sich dabei um eine Umkrempelung des Endbereichs der Aussenschale. Es handelt sich um den Endbereich, welcher von dem Kühler bzw. dem Antrieb im Einbauzustand weg angeordnet ist. Dabei weist die Innenschale auch im Bereich der Aussendarstellung einen grössten Umfang auf, welche in die Walzenröhre wenigstens teilweise eingelassen werden kann. Zumindest der eine Teil der Innenschale, welche in die Walzenröhre hineinragt weist entsprechende Bohrungen auf, damit durch Walzenröhrenbohrungen mittels Schrauben oder anderer Befestigungsmittel die Aussenschale mit der Walzenröhre verbunden werden kann.

Die Innenschale weist eine Abdeckplatte auf. Dabei ist die Abdeckplatte derart in der Innenschale aufgenommen, dass sie im Wesentlichen einen Durchgangsschlitz zwischen der Trichterwand der Innenschale und sich selbst lässt, sodass die in dem Innenbereich der Walzenröhre befindliche Luft über diesen Durchgangsschlitz entweichen soll. Auf diese Weise kann ein gezielterer verdichteter Luftzug gestaltet werden. Ausserdem dient die Abdeckplatte unter anderem auch dem Schutz der Kraftübertragung.

Das Hydrauliksystem, welches für den Betrieb der unterschiedlichen Anbaugeräte vorgesehen ist, weist mehrere untereinander in Verbindung stehende Hydraulikreservoirs auf, die an unterschiedlichen Positionen des Einachsfahrzeuges angeordnet sind.

Weiterhin steht das Hydrauliksystem in Wirkverbindung mit dem Kühler. Wirkverbindung bedeutet hierbei, dass der Kühler eine Hydraulikflüssigkeit des Hydrauliksystems kühlt.

Die Lage eines ersten Hydraulikreservoirs und eines zweiten Hydraulikreservoirs im Inneren der Innenschale der ersten bzw. zweiten Stachelwalze bringt neben der Schwerpunktverlagerung in Richtung des Bodens noch einen weiteren wesentlichen Vorteil mit sich. Da die erste Stachelwalze und die zweite Stachelwalze luftdurchlässig ausgebildet sind und über Ansaugöffnungen, Durchlassöffnungen und Durchgangsschlitze verfügen, herrscht im Inneren der Stachelwalzen ein stetiger Luftstrom der, in Verbindung mit der über die Walzenröhre an den Boden abgegebenen Wärme für eine passive Kühlung das ersten und/oder zweiten Hydraulikreservoirs sorgen. Dies wirkt sich insbesondere auf den Kühler aus, welche weniger stark durch das Hydrauliksystem belastet wird und so mehr Kapazität für die Kühlung des Antriebs freibehält.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine erste Teilseitenansicht des erfindungsgemässen Einachsfahrzeuges von links;
- Figur 2: eine Frontalansicht auf das Einachsfahrzeug aus der Figur 1;
- Figur 3: eine zweite Teilseitenansicht des erfindungsgemässen Einachsfahrzeuges von rechts;
- Figur 4: eine geschnittene vergrösserte Ansicht einer erfindungsgemässen Stachelwalze.

### Ausführungsbeispiel

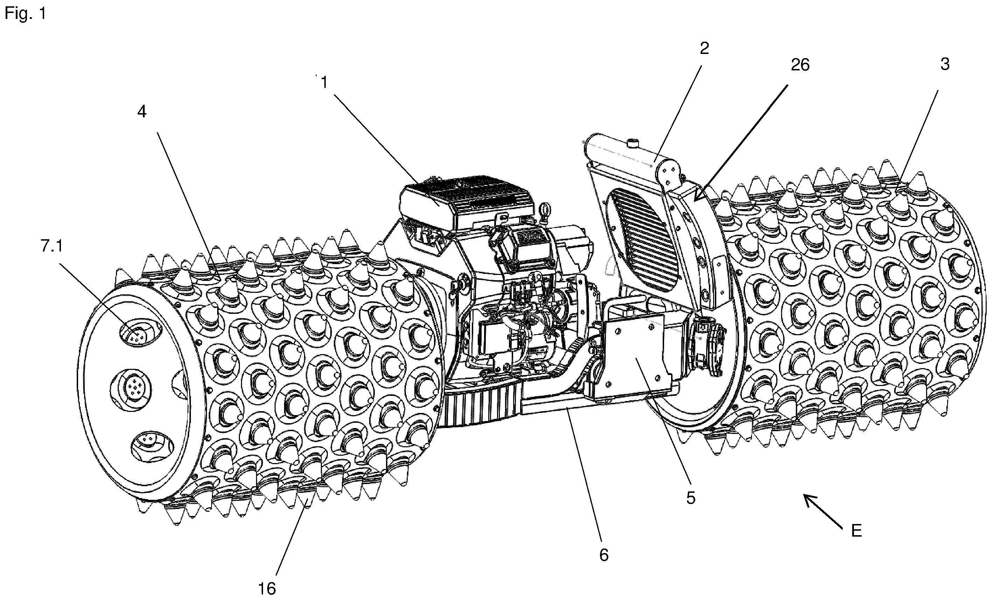

In Figur 1 ist ein Einachsfahrzeug E dargestellt. Er besteht in erster Linie aus einem Antrieb 1, welcher relativ zentral zwischen einer ersten Stachelwalze 3 und einer zweiten Stachelwalze 4 angeordnet ist.

Weiter ist ein Querträger 6 gezeigt, welche von der ersten Stachelwalze 3 zu der zweiten Stachelwalze 4 verläuft und auf welchem der Antrieb 1 sitzt. Dabei ist der Antrieb 1 näher an der zweiten Stachelwalze 4 angeordnet und ein Kühler 2 näher an der ersten Stachelwalze 3. Im Bereich des Kühlers 2 ist zudem ein Teil eines Hydrauliksystems 26 ersichtlich.

Weiter ist eine Werkzeugaufnahme 5 gegeben, welche frontseitig schräg vor dem Antrieb 1 angeordnet ist. Diese Werkzeugaufnahme 5 dient der späteren Befestigung eines Arbeitsgeräts, wie beispielsweise einer Mähvorrichtung oder eines anderen landwirtschaftlichen Gerätes.

Wie in der Figur 1 gut zu erkennen ist, ist der Kühler nicht parallel hinter der Werkzeugaufnahme 5 angeordnet, sondern von dem Antrieb 1 weggedreht in Richtung zu der ersten Stachelwalze 3. Das bedeutet, dass der Kühler 2 zu der ersten Stachelwalze 3 hin luftaufnehmend angeordnet ist, wobei die erste Stachelwalze 3 luftdurchlässig ausgebildet ist.

Ausserdem ist an einer Stirnfläche der zweiten Stachelwalze 4 eine Ansaugöffnung 7.1 gezeigt. Diese Ansaugöffnung 7.1 dient, wie die anderen gezeigten Ansaugöffnungen auch, dem Einlass von Frischluft in die zweite Stachelwalze 4.

Zuletzt weisen die beiden Stachelwalzen 3, 4 eine Vielzahl von Stacheln 16 auf ihrer Aussenfläche bzw. Aussenlauffläche auf.

Die in der Figur 1 bereits beschriebenen Merkmale werden in den nachfolgenden Figuren nur dann nochmals gesondert beschrieben, wenn hierfür ein eigener Bedarf besteht. Ansonsten gelten die Ausführungen zu der Figur 1 auch für die Merkmale der übrigen Figuren. Dies gilt gerade dann, wenn die gleichen funktionalen Merkmale mit den gleichen Bezugsziffern versehen sind.

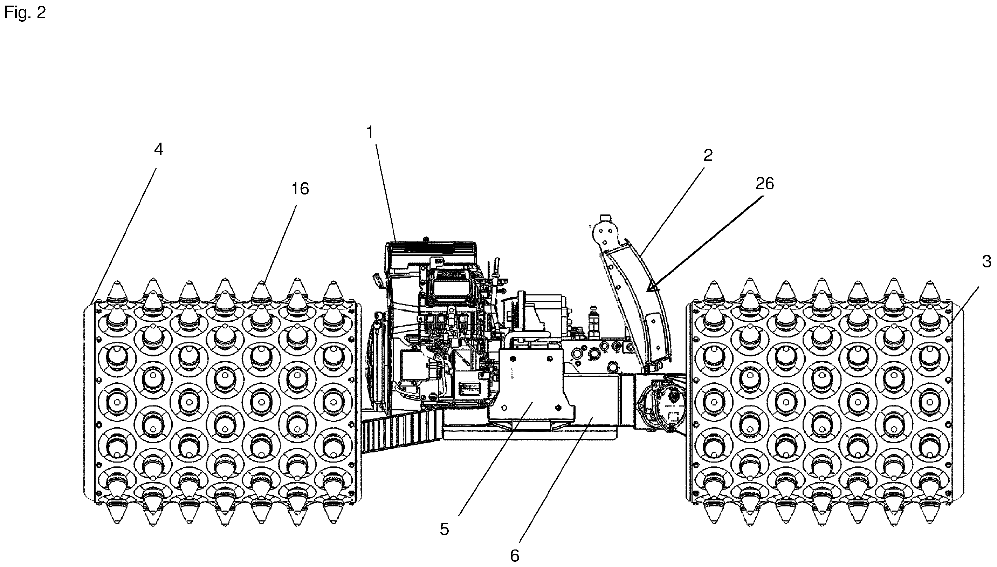

In der Figur 2 ist eine Frontalansicht der Figur 1 gezeigt. Dort ist gezeigt, wie der Kühler 2 leicht zu dem Antrieb 1 , also angewinkelt angeordnet ist, wobei eine Luftaufnahmeseite des Kühlers 2 eindeutig zu der ersten Stachelwalze 3 hin angeordnet ist.

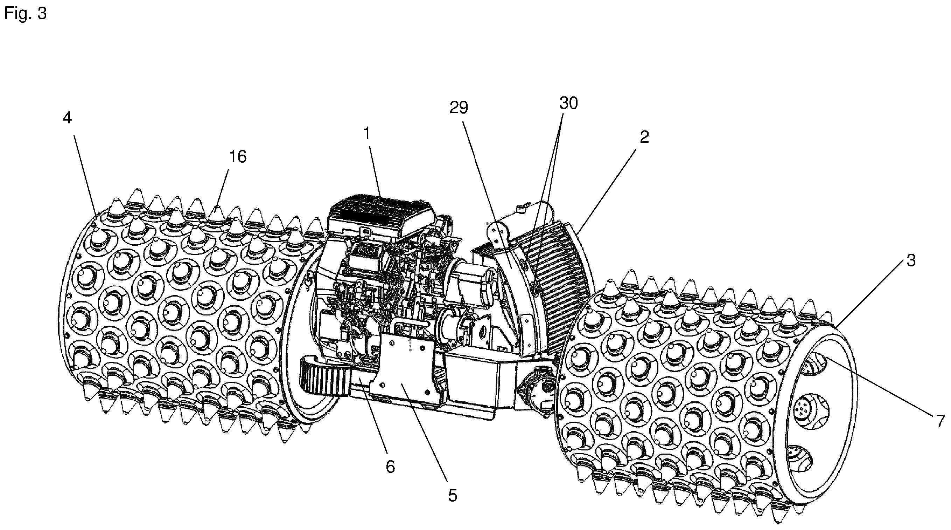

In der Figur 3 ist zusätzlich zu den in den Figuren 1 und 2 beschriebenen Merkmalen zu erkennen, dass eine Ansaugöffnung 7 im Inneren der ersten Stachelwalze 3 vorhanden ist.

Weiterhin ist aus dieser Ansicht besonders gut ein drittes Hydraulikreservoir 29 ersichtlich, welches seitlich in Fahrtrichtung an dem Kühler 2 angeordnet ist. Das dritte Hydraulikreservoir 29 verfügt zudem über entsprechende hydraulische Kupplungsanschlüsse 30 für die Anbaugeräte.

Wie bereits beschrieben würde stellt diese Variante nur ein Ausführungsbeispiel dar, wobei insbesondere die Positionierung oder das Vorhandensein des dritten Hydraulikreservoirs 29, flexibel in der Ausgestaltung vorgenommen werden können.

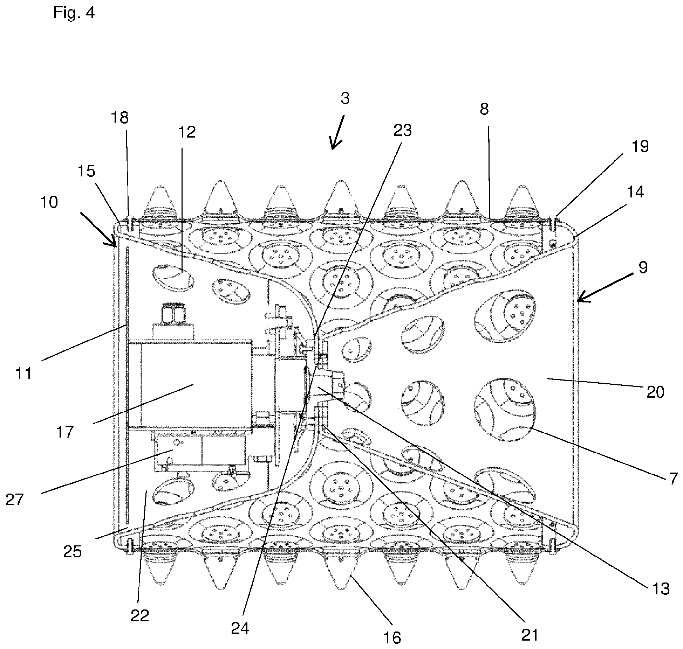

In der Figur 4 ist eine geschnittene Seitenansicht der ersten Stachelwalze 3 gezeigt. Dort ist eine Walzenröhre 8 gezeigt auf deren Aussenfläche die Stacheln 16 angeordnet sind. Weiter ist eine Aussenschale 9 und eine Innenschale 10 zu erkennen, die im Inneren der Walzenröhre 8 angeordnet sind.

Die Aussenschale 9 weist dabei eine erste Trichterform 20 auf. Die erste Trichterform 20 wiederum bildet einen ersten Boden 21 aus. Der erste Boden 21 ist dabei plan ausgebildet. Die erste Trichterform 20 bildet dabei die Ansaugöffnung 7 aus. Der erste Boden 21 weist dabei das eine Ende der ersten Trichterform 20 auf. Das andere Ende der ersten Trichterform 20 bildet eine Aussenbördelung 14 aus.

Ausserdem ist zu erkennen, wie die Aussenbördelung 14 über ein zweites Verbindungselement 19 mit der Walzenröhre 8 verbunden ist.

Die Innenschale 10 ist zu dem Antrieb 1 bzw. dem Kühler 2 hin angeordnet. Die Aussenschale 9 ist weg vom Antrieb 1 bzw. dem Kühler 2 angeordnet. Die Innenschale 10 bildet eine zweite Trichterform 22 aus, wobei in die zweite Trichterform 22 eine Durchlassöffnung 12 eingelassen ist. Neben der bezeichneten Durchlassöffnung 12 sind auch weitere Durchlassöffnungen ohne Bezugsziffern gezeigt. Die zweite Trichterform 22 bildet einends einen zweiten Boden 23 und andernends eine Innenbördelung 15 aus.

Der erste Boden 21 und der zweite Boden 23 liegen etwa mittig in der ersten Stachelwalze 3 aneinander an. Dabei bilden die beiden Böden 21, 23 einen gemeinsamen Durchbruch 24 aus. In dem Durchbruch 24 wiederum ist eine Walzenanbindung 13 gezeigt, wobei die Walzenanbindung 13 wiederum mit einer Kraftübertragung 17 verbunden ist.

Ausserdem ist ein erstes Verbindungselement 18 gezeigt, welches die Innenschale 10 mit der Walzenröhre 8 verbindet. Weiter seine Abdeckplatte 11 gezeigt, welche an der Kraftübertragung 17 angebunden ist und dabei einen Durchgangsschlitz 25 zwischen der Innenschale 10 und der Abdeckplatte 11 ausbildet.

An der Unterseite der Kraftübertragung 17 und innerhalb der Innenschale 10 ist ein erstes Hydraulikreservoir 27 angeordnet, wobei mit Unterseite die Seite gemeint ist, die einem Boden oder einer befahrbaren Fläche bei ordnungsgemässer Verwendung des Einachsfahrzeug zugewandt ist.

In vorliegendem Ausführungsbeispiel ist das erste Hydraulikreservoir 27 vergleichsweise klein ausgebildet und nimmt nicht das maximale Volumen unterhalb der Kraftübertagung 17 innerhalb der Innenschale 10 ein. Unabhängig von dem Ausführungsbeispiel welches in der Abbildung in Figur 4 dargestellt ist, kann das erste Hydraulikreservoir 27 deutlich mehr Volumen in diesem Bereich einnehmen, so dass das maximale Volumen in diesem Bereich unterhalb der Kraftübertragung 17 ausgenutzt wird. Dabei kann sich die Formgebung des Hydraulikreservoirs 27 ebenfalls von der Formgebung des Hydraulikreservoirs 27 aus Figur 4 unterscheiden. Hier ist in Hinsicht auf die Ausfüllung des vorhandenen Freiraums eine an die Innenschale 10 und die Kraftübertagung angepasste Ausformung denkbar, die das maximale Volumen ausnutzt. Maximal bedeutet hierbei, dass das Hydraulikreservoir 27 unterhalb der Kraftübertragung 17 in der Innenschale 10 volumenfüllend angeordnet ist und dabei bis an die zweite Trichterform 22 heranreicht. Dabei soll die Rotationsfähigkeit der ersten Stachelwalze 3 nicht beeinträchtigt werden.

Die Beschreibung für die erste Stachelwalze 3 gilt auch für die zweite Stachelwalze 4. Auch die zweite Stachelwalze 4 weist eine weitere Innenschale, eine weitere Aussenschale, eine weitere Kraftübertragung und ein zweites Hydraulikreservoir auf. Die beiden Stachelwalzen 3, 4 sind im gezeigten Ausführungsbeispiel identisch ausgeführt.

### Bezugszeichenliste

| | |
|---|---|
| 1 | Antrieb |
| 2 | Kühler |
| 3 | Erste Stachelwalze |
| 4 | Zweite Stachelwalze |
| 5 | Werkzeugaufnahme |
| 6 | Querträger |
| 7 | Ansaugöffnung |
| 8 | Walzenröhre |
| 9 | Aussenschale |
| 10 | Innenschale |
| 11 | Abdeckplatte |
| 12 | Durchlassöffnung |
| 13 | Walzenanbindung |
| 14 | Aussenbördelung |
| 15 | Innenbördelung |
| 16 | Stachel |
| 17 | Kraftübertragung |
| 18 | Erstes Verbindungselement |
| 19 | Zweites Verbindungselement |
| 20 | Erste Trichterform |
| 21 | Erster Boden |
| 22 | Zweite Trichterform |
| 23 | Zweiter Boden |
| 24 | Durchbruch |
| 25 | Durchgangsschlitz |
| 26 | Hydrauliksystem |
| 27 | erstes Hydraulikreservoir |
| 28 | |
| 29 | drittes Hydraulikreservoir |
| 30 | hydraulische Kupplungsanschlüsse |
| 31 | |
| 32 | |
| E | Einachsfahrzeug |

## Patentansprüche

1. Einachsfahrzeug (E) mit einem Antrieb (1), einem Kühler (2), einer ersten Stachelwalze (3), einer zweiten Stachelwalze (4) und einem Hydrauliksystem (26), wobei zwischen der ersten Stachelwalze (3) und der zweiten Stachelwalze (4) ein Querträger (6) angeordnet ist, wobei auf dem Querträger (6) der Antrieb (1) und der Kühler (2) angeordnet sind, wobei der Antrieb (1) mit den beiden Stachelwalzen (3, 4) über jeweils eine Kraftübertragung (17.1, 17.2) kraftübertragend verbunden ist, wobei das Hydrauliksystem (26) mit dem Kühler (2) wirkverbunden ist,
**dadurch gekennzeichnet, dass**
in der ersten und/oder der zweiten Stachelwalze (3, 4) eine Innenschale (10) und eine Aussenschale (9) vorhanden sind, wobei die Innenschale (10) zu dem Querträger (6) angeordnet ist und die jeweilige Aussenschale (9) weg von dem Querträger (6) angeordnet ist, wobei die Innenschale (10) einen zweiten Boden (23) und die Aussenschale (9) einen ersten Boden (21) aufweist, wobei der erste Boden (21) und der zweite Boden (23) aneinander anliegend angeordnet sind, wobei die erste Stachelwalze (3) und die zweite Stachelwalze (4) luftdurchlässig ausgebildet sind und über Ansaugöffnungen (7), Durchlassöffnungen (12) und Durchgangsschlitze (25) verfügen.

2. Einachsfahrzeug (E) nach Anspruch 1, **dadurch gekennzeichnet, dass** ein erstes Hydraulikreservoir (27) innerhalb einer ersten Innenschale (10.1) der ersten Stachelwalze (3) unterhalb der ersten Kraftübertagung (17.1) angeordnet ist.

3. Einachsfahrzeug (E) nach einem der Ansprüche 1 oder 2, **dadurch gekennzeichnet, dass** ein zweites Hydraulikreservoir innerhalb einer zweiten Innenschale (10.2) der zweiten Stachelwalze (4) unterhalb der zweiten Kraftübertagung (17.2) angeordnet ist.

4. Einachsfahrzeug (E) nach einem der Ansprüche 2 oder 3, **dadurch gekennzeichnet, dass** das erste Hydraulikreservoir (27) und das zweite Hydraulikreservoir ein maximales Volumen im Bereich unterhalb der Kraftübertagung (17.1, 17.2) innerhalb der Innenschale (10) zu einer Innenwandung der Innenschale (10.1, 10.2) hin ausfüllen, wobei das erste Hydraulikreservoir (27) an dem einen Ende des Querträgers (6) unterhalb der ersten Kraftübertragung (17.1) angeordnet ist und das zweite Hydraulikreservoir an dem zweiten Ende des Querträgers (6) unterhalb der zweiten Kraftübertragung (17.2) angeordnet ist.

5. Einachsfahrzeug (E) nach Anspruch 1, **dadurch gekennzeichnet, dass** das Hydrauliksystem (26) in Wirkverbindung mit dem Kühler (2) steht.

6. Einachsfahrzeug (E) nach Anspruch 1, **dadurch gekennzeichnet, dass** das Hydrauliksystem (26) über hydraulische Kupplungsanschlüsse (30) für Anbaugeräte verfügt.

7. Einachsfahrzeug (E) nach Anspruch 6, **dadurch gekennzeichnet, dass** die hydraulischen Kupplungsanschlüsse (30) an einem dritten Hydraulikreservoir (29) angeordnet sind.

8. Einachsfahrzeug (E) nach einem der vorigen Ansprüche 2 oder 3, **dadurch gekennzeichnet, dass** das erste Hydraulikreservoir (27) und/oder das zweite Hydraulikreservoir jeweils über eine separate Wärmetauschvorrichtung verfügen.

## Claims

1. Single-axle vehicle (E) with a drive (1), a radiator (2), a first spiked roller (3), a second spiked roller (4) and a hydraulic system (26), wherein a cross member (6) is arranged between the first spiked roller (3) and the second spiked roller (4), wherein the drive (1) and the radiator (2) are arranged on the cross member (6), wherein the drive (1) is connected to the two spike rollers (3, 4) via respective power transmission means (17.1, 17.2) for transmitting power, wherein the hydraulic system (26) is operatively connected to the radiator (2),
**characterised in that**
the first and/or second spiked rollers (3, 4) have an inner shell (10) and an outer shell (9), the inner shell (10) being arranged towards the cross member (6) and the respective outer shell (9) being arranged away from the cross member (6), the inner shell (10) has a second base (23) and the outer shell (9) has a first base (21), the first base (21) and the second base (23) being arranged adjacent to each other, the first spiked roller (3) and the second spiked roller (4) being designed to be air-permeable and having suction openings (7), passage openings (12) and passage slots (25).

2. Single-axle vehicle (E) according to claim 1, **characterised in that** a first hydraulic reservoir (27) is arranged within a first inner shell (10.1) of the first spiked roller (3) below the first power transmission (17.1).

3. Single-axle vehicle (E) according to one of claims 1 or 2, **characterised in that** a second hydraulic reservoir is arranged within a second inner shell (10.2) of the second spiked roller (4) below the second power transmission (17.2).

4. Single-axle vehicle (E) according to one of claims 2 or 3, **characterised in that** the first hydraulic reservoir (27) and the second hydraulic reservoir fill a maximum volume in the area below the power transmission (17.1, 17.2) within the inner shell (10) towards an inner wall of the inner shell (10.1, 10.2), wherein the first hydraulic reservoir (27) is arranged at one end of the cross member (6) below the first power transmission (17.1) and the second hydraulic reservoir is arranged at the second end of the cross member (6) below the second power transmission (17.2).

5. Single-axle vehicle (E) according to claim 1, **characterised in that** the hydraulic system (26) is in operative connection with the radiator (2).

6. Single-axle vehicle (E) according to claim 1, **characterised in that** the hydraulic system (26) has hydraulic coupling connections (30) for attachments.

7. Single-axle vehicle (E) according to claim 6, **characterised in that** the hydraulic coupling connections (30) are arranged on a third hydraulic reservoir (29).

8. Single-axle vehicle (E) according to one of the previous claims 2 or 3, **characterised in that** the first hydraulic reservoir (27) and/or the second hydraulic reservoir each have a separate heat exchange device

## Revendications

1. Véhicule à essieu unique (E) comportant un entraînement (1), un radiateur (2), un premier rouleau à pointes (3), un second rouleau à pointes (4) et un système hydraulique (26), une traverse (6) étant disposée entre le premier rouleau à pointes (3) et le second rouleau à pointes (4), l'entraînement (1) et le radiateur (2) étant disposés sur la traverse (6), l'entraînement (1) étant relié aux deux rouleaux à pointes (3, 4) par l'intermédiaire d'une transmission de force respective (17.1, 17.2) de manière à transmettre des forces, le système hydraulique (26) étant en liaison active avec le radiateur (2),
**caractérisé en ce que**
une coque intérieure (10) et une coque extérieure (9) sont prévues dans le premier et/ou dans le second rouleau à pointes (3, 4), la coque intérieure (10) étant tournée vers la traverse (6) et la coque extérieure respective (9) étant détournée de la traverse (6), la coque intérieure (10) comprenant un second fond (23), et la coque extérieure (9) comprenant un premier fond (21), le premier fond (21) et le second fond (23) étant disposés de manière adjacente l'un à l'autre, le premier rouleau à pointes (3) et le second rouleau à pointes (4) étant conçus de manière à être perméables à l'air et présentant des ouvertures d'aspiration (7), des ouvertures traversantes (12) et des fentes de passage (25).

2. Véhicule à essieu unique (E) selon la revendication 1,
**caractérisé en ce qu'**un premier réservoir hydraulique (27) est disposé à l'intérieur d'une première coque intérieure (10.1) du premier rouleau à pointes (3) en dessous de la première transmission de force (17.1).

3. Véhicule à essieu unique (E) selon l'une des revendications 1 ou 2,
**caractérisé en ce qu'**un second réservoir hydraulique est disposé à l'intérieur d'une seconde coque intérieure (10.2) du second rouleau à pointes (4) en dessous de la seconde transmission de force (17.2).

4. Véhicule à essieu unique (E) selon l'une des revendications 2 ou 3,
**caractérisé en ce que** le premier réservoir hydraulique (27) et le second réservoir hydraulique remplissent un volume maximal dans la zone en dessous de la transmission de force (17.1, 17.2) à l'intérieur de la coque intérieure (10) jusqu'à une paroi intérieure de la coque intérieure (10.1, 10.2), le premier réservoir hydraulique (27) étant disposé à une extrémité de la traverse (6) en dessous de la première transmission de force (17.1) et le second réservoir hydraulique étant disposé à la seconde extrémité de la traverse (6) en dessous de la seconde transmission de force (17.2).

5. Véhicule à essieu unique (E) selon la revendication 1,
**caractérisé en ce que** le système hydraulique (26) est en liaison active avec le radiateur (2).

6. Véhicule à essieu unique (E) selon la revendication 1,
**caractérisé en ce que** le système hydraulique (26) dispose de raccords d'accouplement hydrauliques (30) pour des accessoires.

7. Véhicule à essieu unique (E) selon la revendication 6,
**caractérisé en ce que** les raccords d'accouplement hydrauliques (30) sont disposés sur un troisième réservoir hydraulique (29).

8. Véhicule à essieu unique (E) selon l'une des revendications précédentes 2 ou 3,
**caractérisé en ce que** le premier réservoir hydraulique (27) et/ou le second réservoir hydraulique dispose(nt) chacun d'un dispositif d'échange thermique séparé.
